# EUROPEAN PATENT SPECIFICATION

(11) **EP 1 968 790 B1**
(45) Date of publication and mention of the grant of the patent: **24.10.2012**
(21) Application number: 07717768.1
(22) Date of filing: 05.01.2007
(51) Int. Cl.: B32B 23/20, B32B 27/28, B29C 45/14, B32B 27/08

(54) **HIGH GLOSS LAMINATES FOR DECORATIVE AUTOMOTIVE PARTS**
HOCHGLANZLAMINAT FÜR FAHRZEUGZIERTEILE
STRATIFIES HAUTEMENT BRILLANTS POUR ELEMENTS DECORATIFS D AUTOMOBILES

(30) Priority: 06.01.2006 US 756676 P
(43) Date of publication of application: 17.09.2008
(73) Proprietor: Avery Dennison Corporation, Pasadena, CA 91103 (US)
(72) Inventor: ROYS, John, E., Lowell, IN 46356 (US); COONS, L., Scott, St. John, Indiana 46373 (US)
(74) Representative: Müller-Boré & Partner Patentanwälte
(86) International application number: PCT/US2007/000462
(87) International publication number: WO 2007/081915

(56) References cited:
- WO-A-2004/074386
- US-A- 4 936 936
- US-A- 5 750 234

## Description

### FIELD OF THE INVENTION

This invention relates generally to high gloss laminates, and more particularly, to the use of these laminates to produce interior and exterior automotive parts with a decorative finish.

### BACKGROUND

Automotive design and manufacture present a unique set of problems in the selection of materials and processes used in manufacturing decorative interior automotive parts, for example. Such automotive interior parts include dashboards and other panel structures made from multi-layer laminates that are formed into complex shapes. In addition to requirements for distinctive design styles in the decorative patterns, these parts also must meet rigorous functional requirements which include hardness or toughness, abrasion resistance, and chemical resistance, to name a few. Automotive laminates are commonly made by thermoforming to produce the desired finished shape. Parts made by such high temperature forming must maintain certain optical properties necessary for the finished part, such as high gloss and distinctness-of-image (DOI), absence of perceptible surface roughness or "orange peel," and optical clarity or absence of haze.

Historically, vinyls and polyurethanes have been used in interior automotive finishes. These materials have poor chemical resistance to such things as insect repellent and suntan lotions. They are also susceptible to scratching and marring. Other materials such as acrylics exhibit some improvement in chemical resistance, and they are hard and therefore have better scratch and mar resistance. But because of their hardness, acrylics can be extremely brittle and difficult to process. Acrylics also can be too brittle for applications that require impact resistance, e.g., air bag doors. PVDF/acrylics blends too have been used for topcoats for automotive interior laminates, in addition to exterior automotive parts. These materials have excellent chemical resistance, but only marginally better scratch and mar resistance when compared with vinyl and polyurethane films.

More specifically, multi-layered automotive laminates are currently used in a variety of applications that require meeting increasingly demanding functional as well as decorative specifications. Such laminates commonly include 1 to 5 mil thick topcoat films made from polyvinylchloride (PVC), polyurethane (PU), PVDF/acrylic blends and acrylics such as polymethylmethacrylate (PMMA). Many manufacturers are now requiring better abrasion and chemical resistance than PVC, PVDF/acrylic and PU films exhibit. Currently manufactured films made from PVDF/acrylic blends may have the chemical resistance, but they can lack the desired level of abrasion resistance. PMMA films have improved abrasion and mar resistance, but are lacking in chemical resistance when compared with PVDF/acrylic blends. PMMA films can provide high gloss and DOI, but because they are brittle, they are more difficult to process through printing, laminating, thermoforming, and molding. PVC films have been used for automotive interior parts, but they are susceptible to adverse weathering effects when exposed to high levels of heat, humidity and UV radiation.

Thus, there is a need for a decorative automotive interior laminate that can be made by lamination and high temperature thermoforming techniques while producing a finished part that achieves the optical, durability, weatherability, and chemical resistance properties required by current automotive specifications.

### SUMMARY OF THE INVENTION

Briefly, one embodiment of this invention provides a shaped article having a finished decorative layer with surface properties meeting OEM criteria for interior automotive use, including an unusually effective balance of chemical resistance, mar or abrasion resistance, optical properties such as high gloss and DOI, and weatherability. Similar articles can meet certain requirements for exterior automotive use. In a process for manufacturing the article of this invention, the decorative layer is formed on the finished part by a combination of printing, dry ink transfer-laminating, and thermoforming techniques. The thermoformed laminate then can be bonded to or molded to an underlying plastic substrate, for example, by injection-cladding techniques. In one embodiment, the decorative layer of this invention is formed as a free film and maintains properties sufficient for interior automotive use throughout subsequent processing steps. The invention is described herein in the context of a decorative layer applied to the surface of a plastic automotive interior panel, or other similar part; but the invention is also applicable to other thermoformed or shaped articles of manufacture having a decorative layer with optical, durability, weatherability, and chemical resistance properties similar to those required for interior automotive use, including articles suitable for exterior automotive use.

One embodiment of the invention comprises a process for making a shaped article, such as an interior automotive laminate, which includes a decorative layer comprising an optically transparent, thermoplastic cellulosic film and an optional primer layer applied to the cellulosic film and dried. A pigmented color layer, which may include multiple print patterns of dry paint or dry ink, is applied to the cellulosic film, or to the optional primer coat, and dried. The color layer may contain an optional pigmented opaque layer. The decorative layer is transferred to a semi-rigid, thermoformable synthetic resinous backing sheet to form a thermoformable multi-layer decorative laminate. The cellulosic film provides a protective outer surface of the decorative laminate. The decorative laminate is thereafter thermoformed to produce a three-dimensionally shaped article which retains a combination of optical, durability, weatherability, and chemical resistance properties necessary for interior automotive applications.

Another embodiment of the invention comprises a thermoformable multi-layer automotive laminate comprising a polymeric backing sheet or film and an automotive quality decorative layer bonded to the backing sheet or film. The decorative layer comprises a light-stabilized cellulosic outer film on its exterior surface, and at least one color layer below and visible through the cellulosic outer film. The color layer may contain an optional opaque layer between decorative print patterns in the color layer and the backing sheet or film. The thermoformable laminate also may comprise an optically transparent (unpigmented) primer layer containing a cellulosic material between the cellulosic outer film and the color layer. In one embodiment, the cellulosic outer film contains cellulose acetate butyrate. The primer layer may comprise a combined cellulosic material and bonding material, such as an acrylic resinous material, for bonding the color layer to the cellulosic outer film. This primer layer bonds to acrylic-based printing inks applied as part of the color layer, for example.

The thermoforming step can produce substantial elongation of the decorative layer. The cellulosic outer film is capable of elongating from 50% to 150%, or more, during thermoforming, without significant loss of its automotive durability, chemical resistance, gloss and other appearance properties.

In one embodiment of the invention, the cellulosic outer film comprises a cellulose ester material selected from a group of cellulose-containing materials which includes cellulose acetate butyrate (CAB), cellulose acetate (CA), cellulose propionate (CP), cellulose acetate propionate (CAP), cellulose acetate phthalate, and mixtures thereof. A presently preferred cellulosic material is CAB as the primary resinous component of the outer film. In other embodiments the CAB may be blended with other cellulosic resins such as CAP, or other resins such as acrylics and/or urethanes, for example. Printing inks may comprise acrylic resins such as PMMA, which may be combined with a cellulose ester material, such as CAP, and pigments. A finished product having a decorative layer suitable for interior automotive use may be made from a system which includes (1) an optional primer having a solids content containing from 25% to 50% PMMA and from 50% to 75% CAP, by weight; (2) printing inks having a solids content containing from 50% to 80% acrylic resin such as PMMA and from 20% to 50% cellulose ester such as CAP, by weight, exclusive of pigment; and (3) an opaque layer containing pigments and an acrylic resinous material as the primary resinous component of the opaque layer.

In one embodiment, the cellulosic outer film comprises a light-stabilized cellulose ester material, such as CAB, containing a combined UV inhibitor and light stabilizer; the primer layer comprises a blend of acrylic resin such as polymethylmethacrylate (PMMA) and a cellulose ester material such as CAP; and the printing inks comprise acrylic resins and a cellulosic material such as CAP. This decorative layer is bonded to a thermoformable polymeric backing sheet, preferably either by an adhesive layer or by an opaque layer containing pigments dispersed in an acrylic resinous bonding material. The resulting laminate may be thermoformed into a three-dimensional shape while maintaining automotive appearance, durability, weatherability and chemical resistance properties that provide improved performance compared to the prior art materials described previously.

The invention provides an automotive quality decorative layer having unusually high gloss and DOI along with durability, weatherability and chemical resistance properties sufficient for automotive use. The cellulosic outer film overcomes the brittleness associated with acrylic films, making it easier to process. It provides a sufficient level of flexibility to be formed, at high thermoforming temperatures, into a desired three-dimensional shape. The cellulosic outer film also has better cold temperature impact resistance than acrylics, for example. The cellulosic outer film retains a sufficient level of toughness to produce a smooth defect-free outer surface following thermoforming. This level of toughness is characterized by a glass transition temperature (Tg) in excess of 145°C, and in other embodiments, at least 150°C. The formed cellulosic laminate also has an improved balance of hardness and scratch and mar resistance along with better chemical resistance than the prior art surfacing materials. These improvements, in one embodiment, are at sufficient levels to meet rigorous interior automotive appearance and durability requirements, as described below.

These and other aspects of the invention will be more fully understood by referring to the following detailed description and the accompanying drawings.

### BRIEF DESCRIPTION OF THE DRAWINGS

FIG. 1 is a fragmentary schematic cross-sectional view illustrating components of a high gloss automotive laminate according to principles of this invention.

FIG. 2 is a fragmentary schematic cross-sectional view illustrating a finished thermoformed shaped and molded automotive laminate according to principles of this invention.

FIG. 3 is a schematic view illustrating processing steps for applying decorative ink patterns as part of a decorative print pattern applied to a cellulosic film in the form of a free film.

FIG. 4 is a schematic view illustrating a laminating step for forming a temporary carrier supported decorative film.

FIG. 5 is a schematic view illustrating a process for laminating the decorative cellulosic film to a thermoformable semi-rigid polymeric backing sheet.

### DETAILED DESCRIPTION

A decorative thermoformable multi-layer laminate capable of automotive use is made by a combination of processing steps including forming a free film, printing on the free film, dry paint or ink transfer-laminating, and thermoforming techniques for forming a shaped laminate which may be highly contoured. The shaped laminate then may be molded to an underlying substrate material. The thermoformed laminate can be bonded to the substrate by injection-cladding techniques. Use of the process and article of this invention is described in the context of shaped decorative automotive interior parts used for covering mechanical parts of an automotive interior, such as dashboards, instrument panels, door panels, air bag covers, and the like. These components, because of their functional nature, are distinguished from purely aesthetic interior decorative parts which do not necessarily have the same rigorous automotive specifications for appearance, wear resistance, chemical resistance and weatherability such as UV resistance, for example. However, other end uses of the process and shaped article also are possible, such as for certain exterior automotive uses, without departing from the scope of the invention.

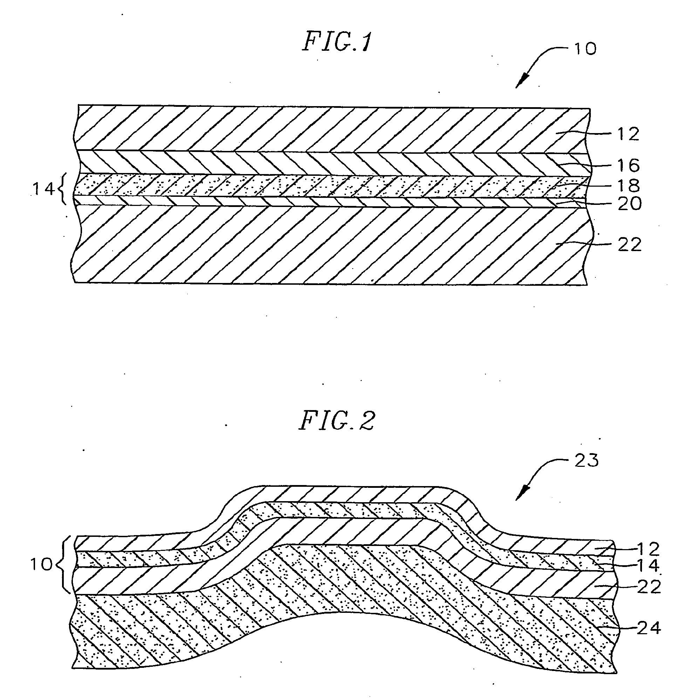

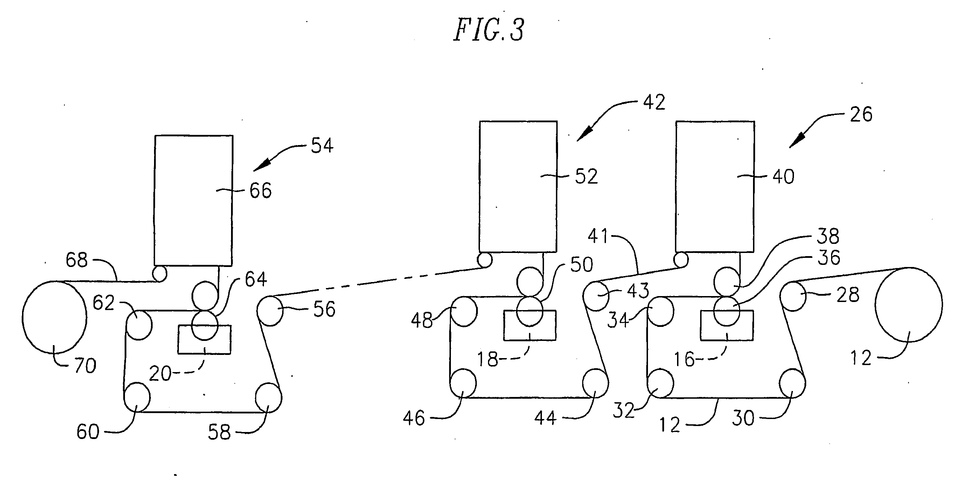

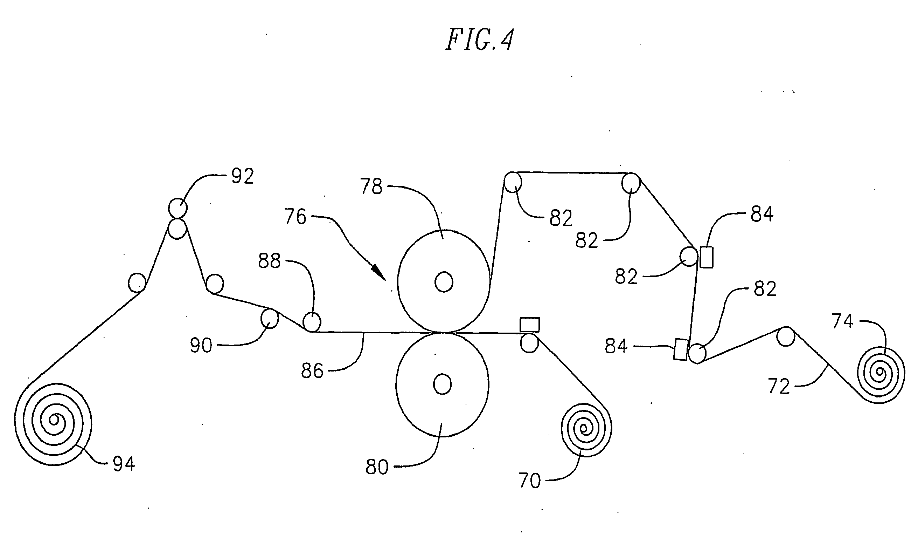

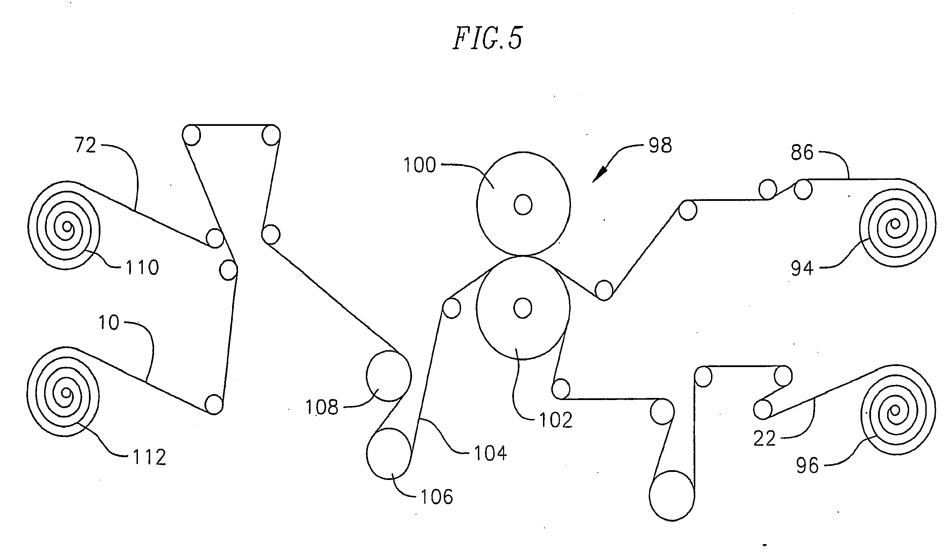

FIG. 1 illustrates components of a decorative multi-layer laminate according to principles of this invention. The laminate of FIG. 1 is made by a multi-stage casting or coating process described below and illustrated in FIG. 3. The decorative laminate then can be transfer-laminated to a thermoformable polymeric backing sheet as illustrated in FIG. 4, and then thermoformed into a desired three-dimensional shape as illustrated in FIG. 5. FIG. 2 illustrates one form of the invention in which the decorative laminate has been thermoformed and then bonded to a molded substrate sheet.

Referring to FIG. 1, a thermoformable decorative laminate 10 includes an optically transparent formable protective outer film or top coat 12 preferably formed as a free film. An underlying color layer 14 may be applied to the underside of the transparent outer film using an optional intervening primer layer 16 which is coated as a continuous layer and is essentially unpigmented, so that the decorative pattern provided by the color layer 14 can be visible through the primer layer and the outer film 12. The color layer may include one or more decorative pigmented color coats 18 in one or more solid colors. In one embodiment, the color coats are applied as separate print patterns using printing inks or similar solvent based resinous coating materials containing pigments. The layers of printing inks can be applied in sequence to form a decorative wood grain pattern, for example.

The color layer 14 also can include a pigmented opaque layer 20. In one embodiment, the layers of printing ink are applied in discontinuous patterns, with a background color provided by a continuous pigmented opaque layer that forms the last of the color coats. Alternatively, pigments contained in the thermoformable backing sheet, described below, can provide at least a portion of a background color visible through the outer film layer 12.

The decorative laminate 10 also includes a thermoformable semi-rigid polymeric backing sheet 22. The decorative portion of a laminate provided by the protective outer film 12 and its underlying color layer 14 is bonded to the backing sheet by transfer-lamination techniques described below. In one embodiment, the backing sheet may be bonded directly to the color layer 14, provided there is sufficient adhesion at the opaque layer interface; or in the alternative, the backing sheet may be bonded to the decorative film by an intervening adhesive tie coat (not shown).

The protective outer film 12 comprises a cellulosic material having high gloss and good optical clarity, formability and abrasion resistance. The cellulosic film-forming material comprises a cellulose ester material such as those described previously. In one embodiment of the outer film 12, the cellulose ester material comprises an acetylated cellulosic material such as cellulose acetate butyrate (CAB) and/or cellulose acetate propionate (CAP). For high gloss applications the cellulosic film can produce an exterior surface with a 60° gloss level in excess of 75 gloss units, and gloss above this level is maintained through subsequent thermoforming. Tests have shown that the cellulosic material may be formulated to provide good levels of chemical resistance to such materials as suntan lotion and insect repellant, along with good levels of scratch and mar resistance. The cellulosic material also has improved flexibility when compared with acrylic-based films, the cellulosic film providing improved ability to maintain automotive optical and durability properties during thermoforming. The cellulosic material has high tensile strength at thermoforming processing conditions, and the resulting toughness has been shown to enhance surface smoothness (reduced orange peel) when compared with lower Tg materials. A desired glass transition temperature (Tg) of greater than 145°C, and preferably at or above 150°C, for the outer film 12 is produced by relatively lower butyryl levels of less than 40% (versus relatively higher acetyl content) in a CAB-containing outer film, for example.

In one embodiment, the cellulosic film is formulated as a light-stabilized free film. The cellulosic material can be combined with a plasticizer, a UV absorber and a UV light stabilizer, although in other embodiments, the outer film may contain no plasticizer, although the cellulosic film may be "plasticized" to some extent by other additives such as certain UV inhibitor and/or light stabilizer materials. In some embodiments (described below), the cellulosic outer film 12, particularly a free film containing CAB, as its principal component, contains essentially no extraneously added plasticizer. The cellulosic film is described as a "light-stabilized" film herein owing to its containing a blend of a UV absorber and a UV light stabilizer. Tests have shown that these components produce superior resistance to UV radiation at levels that meet OEM automotive specifications.

In one embodiment, the cellulosic component comprises 94% or more, by weight, of the film's dry film-forming material (non-volatile solids), with the balance of less than 6%, by weight, additives (non-volatile solids) comprising the combined optional plasticizer and the combined UV absorber and light stabilizer materials. As mentioned previously, the cellulosic component primarily comprises cellulose acetate butyrate. In one embodiment, the cellulosic film formulation comprises from 97% to 99%, by weight, cellulose acetate butyrate; from zero to 2%, by weight, plasticizer, and from 1% to 4%, by weight, blended UV absorber and light stabilizer. More specifically, the stabilizer materials themselves can be blended in a weight ratio of from 25% to 85% UV absorber and from 15% to 75% light stabilizer. More specifically, the stabilizer materials can be blended in the cellulosic film-forming material in a weight percent range from 0.75 to 2.5% UVA (or UV As) and from 0.5 to 2% HALS.

One embodiment of the cellulosic protective outer film is formulated from a cellulose acetate butyrate such as CAB-381 or CAB-171-15 available from Eastman Chemical Company. This material can be blended with an optional plasticizer and a UV absorber/light stabilizer blend comprising the UV absorber (UVA) Tinuvin 928 (benzotriazole) and/or Tinuvin 479 (hydroxyphenyl triazine) and the hindered amine light stabilizer (HALS) Tinuvin 123 (aminoether) or the solid-form HALS, Tinuvin 152, both available from Ciba Specialty Chemicals.

An amount of plasticizer additive may be added to the cellulosic film-forming material to enhance film flexibility. In one embodiment the plasticizer may comprise phosphate-based plasticizers such as Santicizer 141(S-141) and/or Santicizer 154(S-154) available from Ferro Corp. In another embodiment the light-stabilized cellulosic outer film contains no plasticizer. Under certain conditions during casting of the cellulosic outer film the plasticizer can plate out on the cast side of the film which creates haze that detracts from desirable gloss and DOI. Non-plasticized cellulosic films containing CAB can have improved film toughness and gloss/DOI and resistance to haze formation.

The cellulosic film is preferably solvent cast on a metal belt and dried and removed as an unsupported free film, for providing the starting material for the process of making the decorative laminate. The cellulosic starting film preferably has a thickness in the range from 0.032 mm to 0.076 mm (1.25 to 3 mils). A preferred film thickness is 0.044mm (1.75 mills).

The next layer on the cellulosic film is the primer layer 16 which can be used to ensure good adhesion between the cellulosic film 12 and subsequent ink layers. The primer layer is essentially unpigmented. The primer comprises a cellulosic resin component blended with a resinous bonding material. The resinous bonding material comprises an unpigmented resinous ink or paint coat vehicle preferably similar to the vehicle used in the pigmented ink and/or paint coat formulations used in the print and/or color coats of the laminate. The cellulosic and resinous bonding material blend is compatible with both the outer film layer and the subsequent color layer materials, to enhance adhesion on both sides. The resinous bonding material is preferably an acrylic resinous material blended with the cellulosic primer component. The acrylic resin component of the primer can be a polymethylmethacrylate (PMMA) resin, or a polyethylmethacrylate (PEMA) resin, or mixtures thereof, including methacrylate copolymer resins, and minor amounts of other comonomers. The cellulosic component of the primer layer comprises a cellulose ester formed by one or more of the cellulose ester materials described previously. One embodiment comprises CAP as the primary cellulosic component of the primer layer. The CAP component of the primer can have a lower Tg than the Tg of the CAB component of the cellulosic outer film layer 12. The CAP component of the primer can be blended with other cellulose ester materials, although it is preferred to form the CAP component with CAP resins of different densities to control viscosity. In one embodiment, the primer in its dry film form comprises from 25% to 50%, by weight, PMMA and from 50% to 75%. by weight, CAP. In another embodiment, the primer film comprises 50% PMMA and 50% CAP, by weight.

The primer coat, in a preferred form, is light-stabilized. A preferred primer formulation (dry film solids content, by weight) includes 95% to 98% acrylic and CAP materials blended with 2%. to 5% UV absorber and light stabilizer. The preferred light stabilizing materials comprise 1 to 2% of the UV absorber Sanduvor 3050 and 1 to 2% of the hindered amine light stabilizer (HALS) Sanduvor 3206, by weight, both available from Clariant Corporation. The primer film, in one embodiment, does not contain a plasticizer. The primer layer is preferably solvent cast on the cellulosic outer film layer and dried. The primer layer preferably has a dry coat weight of 10-30 gsm or a dry film thickness from 0.007mm to 0.025 (0.3 to 1.0 mil).

After the primer layer is applied to the cellulosic outer film 12, one or more layers 18 of printing ink are applied to the film to form a decorative print pattern. The print coats are applied individually and dried in succession. The printing ink can vary, depending upon design effects. Print patterns include grain inks (to simulate a wood grain pattern), metallics, satin matte or satin gloss, for example. In one embodiment, the printing ink materials include a resinous binder comprising an ink or paint coat vehicle and an organic solvent with dispersed pigments, usually multiple pigments blended with each printing ink, blended with a cellulose ester component. The vehicle for the printing inks may include resinous binder materials selected from acrylic, cellulosic, vinyl, polyester, polyurethane, epoxy or styrene film-forming materials, or blends thereof. A preferred ink formulation contains primarily an acrylic resin as the resinous binder or vehicle. The preferred resinous binder for one or more of the printing inks is a blend of an acrylic resinous material, such as PMMA, a cellulosic component comprised principally of CAP, and a light-stabilizing material, preferably a blend of ultraviolet light absorber (UVA) and hindered amine light stabilizer (HALS). The CAP component may be blended with other cellulose ester materials, although the acrylic resin blended with CAP resins produces superior adhesion and ink smoothness. Tests have shown that acrylic resinous binders produce best adhesion and smoothness with a blend of relatively low and high Tg acrylic resinous materials. The low and high Tg materials can have glass transition temperatures in a range of from 85°C to 100°C. A 50/50 blend of low and high viscosity CAPs within this range has produced a good combination of adhesion and smoothness. One preferred ink formulation comprises from 50% to 80% acrylic resin, from 20% to 50% cellulose ester resin such as CAP, and from 2% to 6% light-stabilizing material. A preferred light stabilizing material comprises from 1% to 2% by weight each of the UVA and HALS components, preferably Sanduvor 3050 and Sanduvor 3206. The acrylic/light-stabilized cellulosic print coats are compatible with the acrylic/ight-stabilized cellulosic primer coat.

The ink layers may contain a substantial pigment level in order to provide sufficient opacity to maintain desirable coloration in the finished article. In a highly contoured, three dimensionally shaped article, a large amount of pigment may be necessary for hiding, following subsequent thermoforming steps. For most colors a pigment level of 3% to 5%, by weight, of the solids contained in the ink or coating material, also referred to as the pigment-to-binder ratio, produces the desired opacity in the finished decorative layer. The amount of pigment varies depending upon the color. Because multiple ink layers may be printed onto the primer layer to achieve a complex pattern, the amount of ink may be determined by the different elements in the pattern.

In one embodiment, the multi-layer laminate may be formed without a primer layer as described above, in instances in which the appropriate blend of resins in the ink formulations produces the necessary adhesion between the cellulosic outer film and the color layer.

The opaque layer 20 is next coated onto the last of the print coats. The opaque layer is applied as a continuous layer typically of a solid color to provide a background color for the print pattern. The opaque layer preferably comprises a resinous binder containing uniformly dispersed pigments so as to provide a desired level of opacity. The opaque layer and the print coats can be applied at a combined dry coat weight of 3 to 10 gsm (grams per square meter), or a dry film thickness from 0.003 mm to 0.010 mm (0.1 to 0.4 mils). In one embodiment, the opaque layer comprises a resinous binder that functions as an adhesion layer for bonding the color layer to the backing sheet 22. The opaque layer, in one embodiment, consists essentially of an acrylic resinous material such as PMMA. with the balance comprising solvents, and from 3% to 5%, by weight, pigments, based on the total solids in the opaque layer formulation.

Following the color coating process the resulting decorative film is then laminated to the backing sheet 22 by transfer-lamination techniques. This forms the multi-layer formable laminate 10 shown in FIG: 1. In one embodiment, the backing sheet is preferably a semi-rigid, self-supporting, thermoformable sheet of a polymeric material. The thickness of the backing sheet can range from 0.254 mm to 6.35 mm (10 mils to 250 mils). In applications involving interior automotive laminates, the backing sheet thickness can range from 0.254 mm to 1.016 mm (10 to 40 mils), and one preferred backing sheet thickness is 0.381 mm to 0.508 mm (15 to 20 mils).

Backing sheet materials useful for this invention comprise acrylonitrile-butydiene-styrene (ABS), thermoplastic olefins (TPO), including polypropylenes and polyethylenes, and polyester. Presently preferred polyester sheeting can include copolyester such as polyethylene terephthalate glycol (PETG). In one embodiment, the decorative film may be bonded directly to the backing sheet under the heat and pressure of the transfer-lamination process. Use of an acrylic based opaque layer, for example, can provide sufficient adhesion to an ABS backing sheet. In other instances, a separate adhesive tie coat may be used for bonding the decorative film to a TPO or PETG backing sheet during the transfer-lamination process.

The process for transfer-laminating the decorative film to the polymeric backing sheet involves high temperature lamination in which the decorative film is bonded to the backing sheet under heat and pressure. An example of such a transfer-lamination process for the laminate of this invention is described in more detail below with reference to FIG. 4.

In the next step in the process, the thermoformable laminate 10 is thermoformed into a desired three-dimensional shape. This forms the shaped article 10 shown as a surfacing component of the shaped article 23 illustrated in FIG. 2. Thermoforming techniques used to form the laminate into a contoured configuration are known in the art and are described, for example, in U.S. Patent No. 6,835,267 to Spain et al., which is incorporated herein by reference. Such thermoforming techniques as applied to the laminate of this invention are carried out at forming temperatures typically in excess of 150°C (300 ° F), and commonly at temperatures from 150°C to 182°C (300°F to 360°F).

Following the thermoforming step, the shaped laminate 10 shown in FIG. 2 may be bonded to an underlying substrate sheet or panel 24. Although various molding processes may be used, a common practice in the art involves the insert-mold process by which the thermoformed laminate 10 is placed in an injection mold and the molding material that forms the substrate 24 is injection molded behind the theirmoform. This bonds the substrate material to the side of the shaped backing sheet opposite from the outer film 12. Various plastic molding materials may be used to form the substrate panel 24. Typically these include polymeric materials which are compatible with the material contained in the backing sheet 22. These may include TPOs, ABS, copolyesters such as PETG, polyolefins and the like. These substrate molding materials also may contain additional filler materials or other materials containing gels, in which case the backing sheet 22 can provide a protective interface that avoids any defects contained in the substrate material from being transferred to or otherwise disrupting the optical clarity of the exterior surface formed by the decorative film layer 12.

A process for applying the decorative color layer 14 to the cellulosic outer film 12 is illustrated at FIG. 3. The cellulosic film may be made initially by a solution casting process (not shown) in which the cellulosic material is coated onto a metal belt and passed through a heating zone for evaporating the solvents to form a dried finished film. The cellulosic film, preferably in the form of a self-supporting free film (which can be unsupported by a carrier), is then used as a starting material in the coating process of FIG. 3. The cellulosic outer film 12 is referred to herein as a "free film" in the sense that it is formed as a self-supporting film, which can be made either by casting or extrusion techniques. The free film is then removed from the film-forming process and ends up as a top coat having a "class A" finish on the resulting automotive laminate. Following the film-forming step, the free film is then passed through an optional primer coating station and then through multiple printing stages, to form a desired print pattern on the cellulosic film. As mentioned previously, the free film is provided as a transparent or optically clear film so that the print patterns applied to the cellulosic film are visible through the film (and any option primer coat).

FIG. 3 illustrates an example of multiple printing stages for applying the print pattern and opaque layer to the free film. The cellulosic film 12 is initially wound in a roll form and passes from the unwind roll to a first stage 26 in which the transparent primer layer 16 is coated onto the cellulosic film. In the first stage the cellulosic film 12 passes around tension rolls 28, 30, 32 and 34 and then to a coating station having a gravure cylinder 36, a doctor blade (not shown), and a pressure roll 38 on a side of the film opposite the gravure cylinder. The gravure cylinder applies the primer coat as a continuous coating onto the cellulosic film. The primer-coated film is then passed through a drying oven 40 for drying the primer coat.

The primer-coated film 41 then passes from the first stage oven 40 to a second stage 42 for printing a first pigmented ink layer on the dried primer-coated side of the film. The second stage includes tension rolls 43, 44, 46 and 48 and a gravure print cylinder 50 for applying the first print coat portion of a decorative print pattern. The printed film then passes to a second stage drying oven 52 for evaporating solvents from the coated ink pattern.

One or more additional print coats can be applied to the film in subsequent gravure print stations arranged similar to the preceding gravure station. In each instance the print coat is applied by a gravure cylinder and then passed through a drying oven, in sequence, followed by the final color coating stage 54. This stage of the coating process includes tension rolls 56, 68, 60 and 62 leading to a color coating stage for applying the continuous opaque layer 20 to the decorative film by a gravure cylinder 64, or by reverse roll coat techniques, or other print techniques known to those skilled in the art. The printed and color-coated film is then passed through a final drying stage in an oven 66 and then the decorative color-coated laminate 68 passes from the final drying stage and is wound into a finished roll 70.

FIG. 4 illustrates a processing sequence that follows the coating process of FIG. 3. In the FIG. 4 process, a temporary heat resistant polyester laminating film 72 is provided as an unwind roll 74. The laminating film is preferably a high-gloss oriented polyester film such as Mylar (a trademark of DuPont), Hoechst's Hostaphan 2000 polyester film, or the like. The color-coated film 70 is provided as an unwind roll at a laminating station 76 which includes a heated laminating drum 78 and a rubber pressure roll 80. The polyester laminating film passes to the laminating station around tension rolls 82 and past web cleaners 84. The laminating drum temperature can be 177°C to 190°C (350° to 375°F)applied at a sufficient pressure to bond the cellulosic film side of the color-coated film to the underside of the polyester film. The laminated film 86 then passes into contact with the underside of a chill roll 88 operated at a temperature or 37°C (100°F). The underside of the coated film (the color-coated side) faces down and is exposed to the atmosphere so that any retained solvents may be driven off. Laminate 86 then passes into contact with a tension roll 90 and into pressure contact with a nip roll 92 before being wound into a finished supply roll 94.

The cellulosic outer film side of the color-coated film 70 is laminated to the polyester laminating film 72 so as to improve processing conditions in the subsequent transfer-lamination step. During high temperature lamination of the decorative film to the backing sheet 22, the polyester laminating film functions as a protective film that avoids sticking of the cellulosic film to the laminating drum. In instances in which a metal laminating drum is used, it is preferred to use the polyester laminating film as illustrated in the process of FIG. 4. Alternatively, however, for conditions under which the cellulosic film is laminated to a backing sheet via a silicone rubber laminating roll, or the like, use of the polyester laminating and protective film 72 may be omitted.

FIG. 5 illustrates a process for transfer-laminating the decorative color-coated film to the backing sheet. In the illustrated process the laminated decorative film 86 in its finished roll form 94 is provided as a supply roll positioned above the backing sheet 22 which is provided as a supply roll 96. The two films 86 and 22 pass around separate systems of tension rolls to a laminating station 98 which includes a heated laminating drum 100 and a rubber pressure roll 102. The two films are laminated at a drum temperature of 177°C to 190°C (350°F to 375°F), after which the laminate 104 passes around a series of chill rolls 106 and 108 to produce a controlled temperature reduction. Once the laminated film is properly cooled, the film passes to a final tension roller system and then the temporary laminating film 72 is stripped from the laminate and wound as a finished roll 110. The resulting decorative thermoformable laminate 10 is wound as a finished roll 112. The finished laminate 10 then can be subjected to subsequent thermoforming and/or molding techniques as described previously.

### Examples

In the following examples, numerical values are in parts by weight.

Example 1

One embodiment of a cellulosic film 12, according to principles of this invention, was prepared using the following formulation:

| Components | Parts |
|---|---|
| Cellulose Acetate Butyrate | 95 |
| Plasticizer | 3 |
| UVA/HALS | 2 |

(1) The cellulose acetate butyrate is a material identified as CAB-381, available from Eastman Chemical Company.

(2) The UVA/HALS is a light-stabilizing blend of an ultraviolet absorber and a hindered amine light stabilizer, in a 1: 1 ratio. The UVA comprises Tinuvin 928 and the HALS comprises Tinuvin 123, both available from Ciba Specialty Chemicals.

(3) The plasticizer used in this example comprised TOTM (Tri Octyl Trimellitate) available under the designation Palatinol from BASF.

(4) The film solids components were dispersed in a THF (tetra hydro furan) solvent and solvent cast on a stainless steel belt and dried to form a free film. Solids content of the cast cellulosic film-forming material was 20-25%, by weight.

Example 2

The following formulation provides one example of a cellulosic resin/acrylic resin vehicle that can be used for the primer coat and one or more ink layers:

| Components | Parts |
|---|---|
| Polymethylmethacrylate | 5.18 |
| Cellulose Acetate Propionate | 5.18 |
| UVA | 0.21 |
| HALS | 0.21 |
| Toluene | 35.69 |
| Methyl Propyl Ketone | 35.69 |
| IPOH | 4.49 |
| 1-Nitro Propane | 13.36 |

(1) The PMMA component comprises Elvacite 2021 available from Lucite International Inc.

(2) The cellulose acetate propionate comprises CAP-482-20 available from Eastman Chemical Company.

(3) The UVA comprises Sanduvor 3050 and the HALTS comprises Sanduvor 3206, both available from Clariant Corporation.

(4) The 1-Nitro Propane is a multifunctional solvent available from Angus Chemical Company.

Example 3

An acrylic/CAP primer coat can be made from 91 to 92 percent, by weight, of the vehicle in Example 2, together with 8 to 9 percent, by weight, of an ink diluent comprising the solvents identified in Example 2.

Alternatively, the solids content of the vehicle of Example 2 can be modified to contain from 50% up to 80% acrylic resin and from 50% to 20% CAP, to provide alternative primer coat vehicles.

Example 4

An acrylic/CAP wood grain ink coat can be made from 92 to 93%, by weight, of the vehicle of Example 2, with 3% to 4%, by weight, of an ink diluent comprising the solvents of Example 2, the balance containing 3% to 5%, by weight, pigments. Multiple combinations of pigments can be used depending upon selected colors.

An alternative metallic ink formulation can contain 85% acrylic/CAP vehicle from Example 2, 10% to 12% solvents, and 3% to 4% metallic flakes, such as Metalure available from Avery Dennison Corporation.

Example 5

Another embodiment of a cellulosic film 12, according to principles of this invention, was prepared from the following formulation:

| Components | Parts |
|---|---|
| Cellulose Acetate Butyrate | 97.4 |
| UVA(a) | 1 |
| UVA(b) | 0.5 |
| HALTS | 1 |
| Stearic Acid | 0.1 |

(1) The CAB resinous material comprised CAB-171-15 in powder form available from Eastman Chemical Company.

(2) UVA(a) comprised an ultraviolet inhibitor Tinuvin 928 available from Ciba Specialty Chemicals.

(3) UVA(b) comprised an ultraviolet inhibitor Tinuvin 479 available from Ciba Specialty Chemicals.

(4) The HALTS component comprised a hindered amine light stabilizer Tinuvin 123 available from Ciba Specialty Chemicals.

(5) The stearic acid component is a stripping or release agent for use in removing the free film from the stainless steel casting belt following drying.

(6) The film components were dissolved in a THF solvent and cast to form a free film. Solids content of the dry film-forming material was 20-25% by weight.

This embodiment contained no plasticizer. Other similar cellulosic films can be made with up to 2% plasticizer (percent solids by weight) of one or more phosphate-based plasticizers such as those described below.

Example 6

The following formulation provides one embodiment of a cellulosic/acrylic resin vehicle used as a primer coat and also used in one or more ink layers for the CAB film described in Example 5.

| Components | Parts |
|---|---|
| Polymethylmethacrylate | 4.28 |
| Cellulose Acetate Propionate | 9.54 |
| UVA | 0.20 |
| HALS | 0.20 |
| Toluene | 34.32 |
| Methyl Propyl Ketone | 34.32 |
| IPOH | 4.31 |
| 1-Nitro Propane | 12.84 |

(1) The PMMA component comprises Elvacite 2009 available from Lucite International Inc.

(2) The cellulose acetate propionate comprises CAP-482-0.5 available from Eastman Chemical Company.

In this embodiment the amount of the CAP component in the resinous structure exceeds the amount of the acrylic component: in this instance, an 75/25 ratio. The Elvacite 2009 component lowers the Tg of the resulting composition, compared to the Elvacite 2021 used in Example 2; and the CAP material used in this example produces a lower viscosity coating compared to the CAP component of Example 2. In another embodiment, the two CAP components may be blended to control Tg and viscosity.

Example 7

The ink systems of Examples 4 and 6 are similar to the ink system described in Example 3, in which the CAP component comprises from 20% to 50% of the resinous solids contained in the acrylic/CAP blend. The CAP component of the ink systems also can be modified to comprise various combinations of the CAP 482-20 and/or CAP 482-21.

Example 8

The thermoformable laminate of FIG. 1 was made into test panels subjected to a variety of tests for durability and appearance properties typically used in automotive interior specifications. The test panels were made using light-stabilized cellulosic outer films similar to the formulations in Examples 1 and 5 and with the primer coats and color coat layers similar to the formulations in Examples 2, 3, 4, 6 and 7.

Chemical Resistance

Chemical resistance tests were conducted using cheesecloth saturated with sunscreen and separately with insect repellant. A 500 gram weight was used to hold the saturated cloth on the surface of each test panel for one hour. After removing the test weight, the surfaces were observed for defects such as blistering, swelling, or impressions. The following rating scale was used for test panels tested for resistance to sunscreen and inset repellant:

| Rating | Suntan Lotion | Insect Repellent |
|---|---|---|
| 1 | No Visual Effect | No Visual Effect |
| 2 | Spot/Discoloration | Spot/Discoloration |
| 3 | Very Slight <50% impression no color transfer | Very Slight <50% impression no color transfer |
| 4 | >50% impression no color transfer | >50% impression no color transfer |
| 5 | >50% impression color transfer | >50% impression color transfer |
| 6 | Blistering/complete coating removal | Blistering/complete coating removal |

The minimum acceptable rating is 3.

Various formulations of the cellulosic outer film were tested comparatively for chemical resistance. The light-stabilized films, such as the Example 1 and Example 5 formulations, produced improvements in chemical resistance over similar acrylic, polyurethane and vinyl test panels. Thermoformed test panels having the cellulosic outer film layer produced ratings of 1 and 2 for sunscreen resistance tested according to Ford DVM-0036-MA (4-04), and a rating of 3 for insect repellant resistance according to Ford DVM-0039-MA (4-04).

The test panels also passed numerous OEM test specifications for resistance to a variety of fluids including:
(a) acid, moisture, solvent and glass cleaner resistance - - Daimler/Chrysler LP-4G3PB-31-01 (2-05)
(b) acid/allcalene - - GM 9517P
(c) cleaning agents - - Ford WSS-M15P34-C1
(d) chemical resistance to petroleum, oil, alcohol - - passed various Honda and Toyota OEM test specifications
(e) passed GM chemical resistance test specifications per GM9900P(8-02) interior parts spot exposure.

Hardness, Abrasion and/or Mar Resistance

Thermoformed test panels were tested for hardness (or abrasion and mar resistance) using a five finger scratch test instrument such as the Multi-Finger Scratch/Mar Tester 710, available from Taber Industries. The test panels passed a Ford specification which requires five finger scratch test results of no scratches at a minimum of 8 Newtons.

Comparative hardness tests were conducted with similar test panels having top coat films made from plasticized vinyl (PVC), acrylic, PVDF/acrylic and polyurethane. The tests showed that the cellulosic films of this invention achieved hardness values similar to acrylic and vinyl top coat films, and the hardness values showed improvements in scratch and mar resistance compared to the PVDF/acrylic and polyurethane films. The test results for the cellulosic films exceeded the minimum 8 Newtons requirement.

Separately, the test panels were tested for hardness after chemical resistance to suntan lotion and separately for hardness after chemical resistance to insect repellant. In these tests, the test panels were first exposed to sunscreen and insect repellant and then hardness tests were conducted, using the five finger scratch test, to measure adhesion of the outer film. The cellulosic test films were compared with acrylic, PVC, polyurethane, and PVDF/acrylic test panels. The cellulosic films compared favorably to the other test panels for sunscreen resistance, and showed improved results for insect repellant compared to the PVDF/acrylic, polyurethane and acrylic test panels. Hardness readings of 8 Newtons and above were produced in both tests.

The thermoformed test panels described previously also passed various OEM tests for hardness, abrasion and/or mar resistance, including:
(a) Taber Mar - - SAE J948 (12-03) - 250 gm, 300 cycles
(b) Wear Resistance - - ASTM D4060 (2-02) - 1000 gm load, 750 cycles
(c) Pencil scratch test - - Nissan NES M0141 (98), pencil hardness rating F
(d) Daimler/Chrysler scratch test - - 463DD-18-01 (7-02), passed at loads up to 20 Nt.
(e) Impact test - - passed ASTM D 5420 (3-04).

Weatherabilitv

Comparative tests also were conducted for weatherability using xenon arc weatherability test procedures. According to these test procedures, the test panels are observed visually for evidence of detrimental weathering effects, and test panels are acceptable when showing no evidence of color change, hazing or chalking, blistering or cracking, and delamination. The weatherability tests showed that the cellulosic films perform sufficiently to pass xenon weatherability when blended with the light-stabilizing materials of this invention. Test specifications passed by the cellulosic film test panels included xenon arc Weatherometer test method SAE J1885 (3-92) for 1240 kJ. The cellulosic films that pass such xenon weathering also showed improved chemical resistance. These test data showed improvements over acrylic test panels.

In separate weatherability tests, the thermoformed test panels passed a succession of the following tests:
(a) Xenon arc Weatheromter at 1015.2 kJ, followed by:
(b) Water resistance per Ford FLTM B1 104-01 (1-03) at 32°C, 24 hours, followed by:
(c) Adhesion test x-scribe, 898 tape, 100% adhesion.

Surface Properties-Wave Scan

Acrylic test panels were shown to be too brittle and subject to cracking when subjected to processing conditions such as thermoforming. The plasticized and non-plasticized cellulosic film test panels of this invention had improved flexibility and performance under thermoforming providing improved appearance properties, such as gloss, DOI and absence of orange peel.

The cellulosic film also provided improved surface characteristics such as surface smoothness (absence of surface texture) when compared with more flexible prior art films such as PVDF/acrylic films. Presence of surface roughness following thermoforming can cause orange peel and reduced gloss and DOI. Surface smoothness for various test panels was measured by wave scan techniques that measure the level of light scattering from the test surface. Tests were conducted using the Byk-Gardner microwave scan meter. One portion of the test detects orange peel texture by measuring a light scattering spectrum for surface structures at wave length ranges of 1 to 3 millimeters and from 3 to 10 millimeters, as one example. Test measurements on a scale of zero to 100 indicate smooth to highly structured (dullness) with higher test values. The cellulosic film of this invention produced test readings of 20 or better (lower) for test measurements in each range.

The cellulosic film also has demonstrated improved toughness and resistance to orange peel under thermoforming conditions. Wave scan measurements have shown improvements over PVDF/acrylic films. Certain levels of surface texturing (orange peel) are believed to be caused by wave-like structures from the layers below the cellular outer film having been transmitted through one or more layers of the laminate to the outer surface under processing steps such as lamination and thermoforming. The presence of surface structuring, e.g., from the print coats or from the backing sheet material, may be caused by a build up in texture that produces undesired surface imperfections such as orange peel or grain raising in the top surface. A TPO backing sheet, for example, can cause a transfer of surface roughness to the outer film under thermoforming, for softer outer top coat films.

The cellulosic film is believed to have produced improved surface smoothness and absence of orange peel because of its greater level of film toughness compared with PVDF/acrylic films, for example. The cellulosic film of this invention can be formulated to produce toughness levels characterized by the material having a glass transition temperature (Tg) at or above the thermoforming temperature. In one embodiment, glass transition temperature of the cellulosic film is above 145°C ( 290°F), and more preferably at or above 150°C ( 300°F), and in another embodiment Tg is between 160°C (320° F) and 170°C ( 340°F). Thermoforming can be carried out at temperatures from 150°C to 182°C (300° to 360°F). The film's comparatively higher toughness causes the film to resist transfer of wave-causing defects to the surface especially for TPO backing sheets. Relatively softer films, such as PVDF/acrylic (having a Tg of 270°F or 130°C), generally do not provide the same level of resistance to transfer of surface waves, or the same level of chemical resistance.

Anti-Fogguring

The cellulosic film also provides advantages over vinyl films that are susceptible to interior fogging problems. One disadvantage of vinyl film is its tendency to evolve vapor like materials, such as plasticizers, that may condense on the inside of a windshield, evaporating during high temperature environments. Fogging tests were conducted by measuring the amount of condensed material on window glass exposed to a high temperature environment, using a scale of zero to 100 units, 100 being absence of fogging. Fogging is measured by exposing the test material to a temperature of 100°C and cooling to room temperature. Surface gloss at 60° (also referred to as 60° gloss) is then measured to determine the extent of fogging. According to a GM test specification, 60 gloss units or above is referred. Test panels having the cellulosic film of this invention have produced test results in excess of 85 gloss units at 60° and, in some instances, have had readings of 100. The test panels also have passed SAE J1756 (12-94) test conditions with no visible fogging. The cellulosic film test panels produced consistently better readings than vinyl test panels.

Gloss and DOI

The test panels of this invention also were tested for other surface or appearance properties, including gloss and DOI. These appearance criteria can be measured on various instruments used in the automotive industry, such as those available from BykGardner or HunterLab. DOI was measured on the wave scan instrument described previously. The test panels showed 60° gloss readings in excess of 75 gloss units and DOI values in excess of 65. for both flat panels and thermoformed panels. In one test involving a series of 27 test panels having the cellulosic outer film of this invention, 60° gloss readings were in a range of 83 to 91 and DOI measurements were in a range of 65 to 80.

Haze Resistance

Experimental tests were conducted on the cellulosic outer films to determine factors that minimize haze formation. A hazy appearance of the CAB film is associated with migration of certain plasticizers and other additives. Tests also were conducted to determine the effects of an excessive amount of water impurity in the CAB formulation inasmuch as an excessive amount of water impurity can increase haze.

The test films contained various combinations of UV inhibitor, HALS and plasticizers. The CAB films were cast on a stainless steel belt and dried to observe and measure haze formation. Haze was measured using a Gardner Haze-Gard Plus instrument. Haze measurements were taken as a percent haze versus film thickness. A 2 mil (0.05 mm) thick CAB film having a maximum allowable haze of 1%, for example, converts to a haze/mil value of 0.5%. A haze/mil reading of 0.6% or less is considered unnoticeable haze.

The experimental tests were conducted by comparing haze values using the TOTM plasticizer described in Example 1 above with other similar CAB formulations containing the phosphate-based plasticizers Santicizer 141(S-141) and Santicizer 154(S-154) available from Ferro Corp. Under various processing and drying conditions, haze values for each of these films generally could be produced with a haze/mil reading of 0.4 or less. Films also containing no plasticizer and no UV inhibitor or light stabilizer also produced acceptable haze/mil values in some instances.

Tests also were conducted for measuring the effect of water impurity on CAB film haze. The test results showed that the phosphate-based plasticizers were significantly less vulnerable to the presence of water impurity then the TOTM plasticizers. The solubility of the TOTM plasticizer in water is significantly higher than the solubility of the phosphate based plasticizers, which can account for the fact that the TOTM plasticizer is more vulnerable to the presence of water impurity in the CAB formulation.

Other tests have shown that the improvements of this invention can be achieved with a cellulosic outer film, such as the light-stabilized free film, containing virtually no plasticizer added to the film-forming material. In this instance, film toughness or hardness also produced desired levels of chemical resistance and surface smoothness (absence of orange peel) and resulting optical properties such as high gloss and high DOI.

In an alternative form of the invention, the laminate can be made by an extrusion process in which the thermoplastic cellulosic film is extruded as a free film and then passed through a stack of chill rolls to reduce the temperature of the extruded film. The extruded film is preferably formed by solventless extrusion, and the formulation comprises the plasticized and light-stabilized composition similar to those described previously. The extruded free film is then used as the starting material in a color-coating and lamination process similar to those described previously, followed by thermoforming to produce the shaped laminate.

## Claims

1. A thermoformable laminate comprising a thermoformable polymeric backing sheet, and a decorative layer bonded to the backing sheet, in which the decorative layer comprises a cellulosic outer film formed as a free film which is formed as a self supporting film and comprising a light-stabilized optically transparent thermoplastic cellulose ester film layer on an exterior surface of the laminate, and at least one color layer between the cellulosic outer film and the backing sheet, the color layer visible through the cellulosic outer film.

2. The laminate according to claim 1 further comprising an optically transparent primer layer containing a cellulose ester material positioned between the cellulosic outer film and the color layer, and in which the color layer comprises a cellulose ester material.

3. The laminate according to claim 1 in which the light-stabilized outer film contains a blended UVA inhibitor and UV light stabilizer, and in which the outer film optionally comprises mostly cellulose acetate butyrate, and the at least one color layer optionally includes a cellulose ester component comprising mostly cellulose acetate propionate.

4. The laminate accordingly to claim 1, in which the combined decorative layer.
and backing sheet are thermoformable at a temperature in excess of 150°C (300°F) to form a three-dimensionally shaped automotive laminate having a DOI of 65 or more and/or a 60° gloss of 75 gloss units or more, as measured on Byk -Gardner microwave scan meter.

5. The laminate according to claim 1 in which the cellulosic outer film comprises (a)-(d):
(a) a free film which contains cellulose acetate butyrate,
(b) a light-stabilized acetylated cellulose ester material,
(c) a free film containing essentially no extraneous plasticizer, or
(d) a free film containing less than 2% by weight plasticizer.

6. A multi-layer automotive laminate according to claim 1 in which the laminate is **characterized by** (a)-(c):
(a) an anti-fogging value greater than 85% at 60°,
(b) resistance to suntan lotion and insect repellant according to Ford DVM-0036-MA and Ford DVM-0039-MA at 32°C, respectively, or
(c) the laminate is thermoformable to a three-dimensional shape having a surface smoothness wave scan value of below 20 for frequencies from 1 to 3 mm and from 3 to 10 mm.

7. A thermoformable decorative multi-layer laminate according to claim 1 in which the cellulosic outer film comprises a thermoplastic protective outer layer formed as a free film and principally comprising a cellulose ester component containing mostly cellulose acetate butyrate, the outer layer light-stabilized by a blend of a UV inhibitor and a UV light-stabilizing material dispersed in the free film, and at least one layer of color bonded to and visible through the outer layer, the layer of color containing a cellulose ester material and dispersed pigments.

8. A shaped multi-layer automotive laminate comprising:
an optically transparent cellulosic outer film comprising a light-stabilized cellulose ester material,
at least one color layer positioned below and visible through the cellulosic outer film, and
a polymeric backing sheet bonded to the color layer, the combined cellulosic outer film, color layer and backing sheet having been thermoformed to a three-dimensional shape while retaining a 60° gloss level in excess of 75 gloss units in the shaped product.

9. The shaped automotive laminate according to claim 8 including a transparent primer layer between the cellulosic outer film and the color layer, in which the primer layer comprises (a) - (c):
(a) a cellulose ester material,
(b) a cellulose ester material blended with an unpigmented resinous ink or paint vehicle having adhesive properties, or
(c) an acrylic resinous material and cellulose acetate propionate.

10. A process for making a thermoformable decorative automotive laminate, the process comprising:
providing, as a free film, a flexible optically transparent thermoplastic cellulosic film containing a cellulose ester material, and forming a thermoformable decorative layer by the steps of (a) - (b):
(a) applying an optically transparent primer coat to the cellulosic film, and drying the primer coat on the cellulosic film, the primer coat containing a cellulose ester material as a component blended with an unpigmented resinous ink or paint coat vehicle having adhesive properties, or
(b) applying at least one color layer of pigmented resinous material to the cellulosic film and drying the color layer to form a decorative pattern, the pigmented resinous material containing a cellulose ester material as a component blended with a pigmented resinous vehicle having adhesive properties; and
laminating the decorative layer side of the cellulosic film to a semi-rigid thermoformable polymeric backing sheet to form a thermoformable automotive laminate, including optionally laminating a heat resistant polymeric temporary carrier sheet to an outer surface of the cellulosic film, the carrier sheet supporting the decorative sheet during laminating of the decorative sheet to the backing sheet.

## Patentansprüche

1. Thermoformbares Laminat, umfassend ein thermoformbares Polymerrücken- bzw. trägerschicht und eine dekorative Schicht, gebunden an die Trägerschicht, wobei die dekorative Schicht einen äußeren Cellulosefilm, gebildet als ein freier Film, welcher als ein selbststützender Film gebildet ist, und eine lichtstabilisierte, optisch transparente thermoplastische Celluloseesterfilmschicht auf einer äußeren Oberfläche des Laminats, und mindestens eine Farbschicht zwischen dem äußeren Cellulosefilm und der Trägerschicht, wobei die Farbschicht durch den äußeren Cellulosefilm sichtbar ist.

2. Laminat gemäß Anspruch 1, weiter umfassend eine optisch transparente Primer-Schicht, enthaltend ein Celluloseestermaterial, angeordnet zwischen dem äußeren Cellulosefilm und der Farbschicht, und worin die Farbschicht ein Celluloseestermaterial umfaßt.

3. Laminat gemäß Anspruch 1, wobei der lichtstabilisierte äußere Film ein Blend von UV-Inhibitor und UV-Lichtstabilisator enthält und wobei der äußere Film gegebenenfalls hauptsächlich Celluloseacetatbutyrat umfaßt und die mindestens eine Farbschicht gegebenenfalls eine Celluloseesterkomponente, umfassend hauptsächlich Celluloseacetatpropionat, einschließt.

4. Laminat gemäß Anspruch 1, wobei die kombinierte dekorative Schicht und Trägerschicht bei einer Temperatur im Überschuß von 150°C (300°F) unter Bildung eines dreidimensional geformten Kraftfahrzeuglaminats mit einer DOI von 65 oder mehr und/oder einem 60°Glanz von 75 Glanzeinheiten oder mehr, gemessen auf einem Byk-Gardner Mikrowellenabtastmeter, thermoformbar sind.

5. Laminat gemäß Anspruch 1, wobei der äußere Cellulosefilm (a)-(d) umfaßt:
(a) einen freien Film, welcher Celluloseacetatbutyrat enthält,
(b) ein lichtstabilisiertes acetyliertes Celluloseestermaterial,
(c) einen freien Film, enthaltend im wesentlichen keinen fremden Weichmacher oder
(d) einen freien Film, enthaltend weniger als 2 Gew.-% Weichmacher.

6. Mehrschichtiges Kraftfahrzeuglaminat gemäß Anspruch 1, wobei das Laminat durch (a) - (c) gekennzeichnet ist:
(a) einen Antibeschlagwert von größer als 85% bei 60°,
(b) Beständigkeit gegenüber Sonnenschutzcreme und Insektenschutzmittel gemäß Ford DVM-0036-MA und Ford DVM-0039-MA bei 32°C oder
(c) das Laminat ist zu einer dreidimensionalen Form mit einem Oberflächenglätte-Wellenabtastwert von unter 20 für Frequenzen von 1 bis 3 mm und von 3 bis 10 mm thermoformbar.

7. Thermoformbares dekoratives mehrschichtiges Laminat gemäß Anspruch 1, wobei der äußere Cellulosefilm eine äußere thermoplastische Schutzschicht, gebildet als ein freier Film und hauptsächlich umfassend eine Celluloseesterkomponente, enthaltend hauptsächlich Celluloseacetatbutyrat, die äußere Schicht, lichtstabilisiert durch ein Blend von einem UV-Inhibitor und einem UVlichtstabilisierendem Material dispergiert in dem freien Film, und mindestens eine Farbschicht, gebunden an und sichtbar durch die äußere Schicht, wobei die Farbschicht ein Celluloseestermaterial und dispergierte Pigmente enthält, umfaßt.

8. Geformtes mehrschichtiges Kraftfahrzeuglaminat, umfassend:
einen optisch transparenten äußeren Cellulosefilm, umfassend ein lichtstabilisiertes Celluloseestermaterial,
mindestens eine Farbschicht, angeordnet unterhalb und sichtbar durch den äußeren Cellulosefilm, und
eine Polymerträgerschicht, gebunden an die Farbschicht, wobei die Kombination von äußerem Cellulosefilm, Farbschicht und Trägerschicht zu einer dreidimensionalen Form unter Beibehaltung eines 60° Glanzgrads im Übermaß von 75 Glanzeinheiten in dem geformten Produkt thermogeformt worden sind.

9. Geformtes Kraftfahrzeuglaminat gemäß Anspruch 8, einschließlich einer transparenten Primerschicht zwischen dem äußeren Cellulosefilm und der Farbschicht, wobei die Primerschicht (a) - (c) umfaßt:
(a) ein Celluloseestermaterial,
(b) ein Celluloseestermaterial im Blend mit einer unpigmentierten harzartigen Druckfarbe oder Anstrichträger mit adhäsiven Eigenschaften, oder
(c) ein harzartiges Acrylmaterial und Celluloseacetatpropionat.

10. Verfahren zur Herstellung eines thermoformbaren dekorativen Kraftfahrzeuglaminats, wobei das Verfahren umfaßt:
das Bereitstellen eines flexiblen, optisch transparenten thermoplastischen Cellulosefilms, enthaltend ein Celluloseestermaterial, als ein freier Film und Bilden einer thermoformbaren dekorativen Schicht durch die Schritte (a) - (b):
(a) das Aufbringen einer optisch transparenten Primerbeschichtung auf den Cellulosefilm und Trocknen der Primerbeschichtung auf dem Cellulosefilm, wobei die Primerbeschichtung ein Celluloseestermaterial als eine Komponente, vermischt mit einer unpigmentierten harzartigen Druckfarbe oder Anstrichbeschichtungsträger mit adhäsiven Eigenschaften enthält, oder
(b) das Aufbringen mindestens einer Farbschicht von pigmentiertem harzartigen Material auf den Cellulosefilm und Trocknen der Farbschicht unter Bildung eines dekorativen Musters, wobei das pigmentierte harzartige Material ein Celluloseestermaterial als eine Komponente vermischt mit einem pigmentierten harzartigen Träger mit adhäsiven Eigenschaften enthält, und
das Laminieren der dekorativen Schichtseite des Cellulosefilms auf eine semisteife thermoformbare Polymerträgerschicht unter Bildung eines thermoformbaren Kraftfahrzeuglaminats, einschließlich gegebenenfalls das Laminieren einer wärmebeständigen polymeren temporären Trägerschicht auf eine äußere Oberfläche des Cellulosefilms, wobei die Trägerschicht das dekorative Blatt während des Laminierens des dekorativen Blatts auf die Trägerschicht stützt.

## Revendications

1. Stratifié thermoformable comprenant une feuille de compensation polymérique thermoformable, et une couche décorative liée à la feuille de compensation, dans lequel la couche décorative comprend un film externe cellulosique formé en tant que film libre qui est formé en tant que film autoporteur et comprenant une couche de film d'ester de c thermoplastique optiquement transparente photostabilisée sur une surface extérieure du stratifié, et au moins une couche de couleur entre le film externe cellulosique et la feuille de compensation, la couche de couleur étant visible à travers le film cellulosique externe.

2. Stratifié selon la revendication 1, comprenant en outre une couche d'apprêt optiquement transparente contenant un matériau ester de cellulose positionné entre le film externe cellulosique et la couche de couleur, et dans lequel la couche de couleur comprend un matériau ester de cellulose.

3. Stratifié selon la revendication 1, dans lequel le film externe photostabilisé comprend un inhibiteur d'UV et un photostabilisant UV mélangés et dans lequel le film externe comprend facultativement principalement du butyrate d'acétate de cellulose, et la au moins une couche de couleur comprend facultativement un composant d'ester de cellulose comprenant principalement de l'acétate propionate de cellulose.

4. Stratifié selon la revendication 1, dans lequel la couche décorative combinée et la feuille de compensation sont thermoformables à une température de plus de 150 °C (300 °F) pour former un stratifié pour automobile de forme tridimensionnelle ayant une distinction d'image (DOI) de 65 ou plus et/ou une brillance à 60° de 75 unités de brillance ou plus, comme mesuré sur un dispositif de mesure de balayage de micro-ondes Byk-Gardner.

5. Stratifié selon la revendication 1, dans lequel le film externe cellulosique comprend les éléments (a) à (d) :
(a) un film libre qui contient de l'acétate butyrate de cellulose,
(b) un matériau ester de cellulose acétylé photostabilisé,
(c) un film libre ne contenant essentiellement aucun plastifiant étranger, ou
(d) un film libre contenant moins de 2 % en poids de plastifiant.

6. Stratifié pour automobile multicouche selon la revendication 1, dans lequel le stratifié est **caractérisé par** les éléments (a) à (c) :
(a) une valeur antibuée supérieure à 85 % à 60 °,
(b) une résistance aux lotions de bronzage et aux insectifuges selon Ford DVM-0036-MA et Ford DVM-0039-MA à 32 °C, respectivement, ou
(c) le stratifié est thermoformable en une forme tridimensionnelle ayant une valeur de balayage d'ondes de lissé de surface de moins de 20 pour des fréquences de 1 à 3 mm et de 3 à 10 mm.

7. Stratifié multicouche décoratif thermoformable selon la revendication 1, dans lequel le film externe cellulosique comprend une couche externe protectrice thermoplastique formée en tant que film libre et comprenant principalement un composant ester de cellulose contenant principalement de l'acétate butyrate de cellulose, la couche externe photostabilisée par un mélange d'un inhibiteur d'UV et d'un matériau photostabilisant UV dispersé dans le film libre, et au moins une couche de couleur liée à et visible à travers la couche externe, la couche de couleur contenant un matériau ester de cellulose et des pigments dispersés.

8. Stratifié pour automobile multicouche façonné comprenant :
un film externe cellulosique optiquement transparent comprenant un matériau ester de cellulose photostabilisé,
au moins une couche de couleur positionnée sous et visible à travers le film externe cellulosique, et
une feuille de compensation polymérique liée à la couche de couleur, le film externe cellulosique, la couche de couleur et la feuille de compensation combinés ayant été thermoformés en une forme tridimensionnelle tout en retenant un niveau de brillance à 60° de plus de 75 unités de brillance dans le produit façonné.

9. Stratifié pour automobile façonné selon la revendication 8, comprenant une couche d'apprêt transparente entre le film externe cellulosique et la couche de couleur, dans lequel la couche d'apprêt comprend les éléments (a) à (c) :
(a) un matériau ester de cellulose,
(b) un matériau ester de cellulose mélangé avec une encre résineuse non pigmentée ou un véhicule de peinture ayant un pouvoir adhésif, ou
(c) un matériau résineux acrylique et de l'acétate propionate de cellulose.

10. Procédé de fabrication d'un stratifié pour automobile décoratif thermoformable, le procédé comprenant :
la fourniture, en tant que film libre, d'un film cellulosique thermoplastique optiquement transparent flexible contenant un matériau ester de cellulose, et la formation d'une couche décorative thermoformable par les étapes (a) à (b) :
(a) application d'un revêtement d'apprêt optiquement transparent au film cellulosique et séchage du revêtement d'apprêt sur le film cellulosique, le revêtement d'apprêt contenant un matériau ester de cellulose en tant que composant mélangé avec une encre résineuse non pigmentée ou un véhicule de revêtement de peinture ayant un pouvoir adhésif, ou
(b) application d'au moins une couche de couleur de matériau résineux pigmenté au film cellulosique et séchage de la couche de couleur pour former un motif décoratif, le matériau résineux pigmenté contenant un matériau ester de cellulose en tant que composant mélangé avec un véhicule résineux pigmenté ayant un pouvoir adhésif ; et
stratification du côté couche décorative du film cellulosique à une feuille de compensation polymérique thermoformable semi-rigide pour former un stratifié pour automobile thermoformable, comprenant la stratification éventuelle d'une feuille de support temporaire polymérique résistant à la chaleur à une surface externe du film cellulosique, la feuille de support supportant la feuille décorative pendant la stratification de la feuille décorative à la feuille de compensation.
